(19) Europäisches Patentamt / European Patent Office / Office européen des brevets

(11) **EP 3 884 424 B1**

(12) **EUROPEAN PATENT SPECIFICATION**

(45) Date of publication and mention
of the grant of the patent:
**15.04.2026   Bulletin 2026/16**

(21) Application number: **19809897.2**

(22) Date of filing: **22.11.2019**

(51) International Patent Classification (IPC):
**G07C 9/00** *(2020.01)*     **G01N 33/48** *(2006.01)*
**G06V 20/69** *(2022.01)*     **G01N 15/00** *(2024.01)*
**G01N 15/02** *(2024.01)*     **G02B 21/00** *(2006.01)*

(52) Cooperative Patent Classification (CPC):
**G01N 15/0227; G02B 21/0016; G02B 21/008;
G06V 20/695;** G01N 2015/0038; G01N 2015/0238

(86) International application number:
**PCT/GB2019/053305**

(87) International publication number:
**WO 2020/104814 (28.05.2020 Gazette 2020/22)**

(54) **PARTICLE CHARACTERIZATION USING OPTICAL MICROSCOPY**

TEILCHENCHARAKTERISIERUNG MITTELS OPTISCHER MIKROSKOPIE

CARACTÉRISATION DE PARTICULES PAR MICROSCOPIE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2018   GB 201819033**

(43) Date of publication of application:
**29.09.2021   Bulletin 2021/39**

(73) Proprietor: **Cambridge Enterprise Limited
Cambridge, Cambridgeshire CB2 1TN (GB)**

(72) Inventors:
- **KNOWLES, Tuomas Pertti Jonathan
  Cambridge Cambridgeshire CB2 1EW (GB)**
- **CHALLA, Pavan Kumar
  Cambridge Lensfield Road Cambridge
  Cambridgshire
  CB2 1EW (GB)**
- **SAAR, Kadi Liis
  Cambridge Cambridgeshire CB2 1EW (GB)**
- **PETER, Quentin Alexis
  Cambridge Cambridgeshire CB2 1EW (GB)**
- **KAMINSKI, Clemens
  Cambridge Cambridgeshire CB3 0AS (GB)**
- **VANDERPOORTEN, Oliver
  Cambridge Cambridgeshire CB3 OAS (GB)**

(74) Representative: **Cooley (UK) LLP
22 Bishopsgate
London EC2N 4BQ (GB)**

(56) References cited:
WO-A1-2017/041809     WO-A1-2017/041809
JP-A- 2017 075 958     JP-A- 2017 075 958

- **SHARMA DEEPIKA ET AL: "Single positively
  charged particle trapping in nanofluidic
  systems", MICROELECTRONIC ENGINEERING,
  ELSEVIER PUBLISHERS BV., AMSTERDAM, NL,
  vol. 175, 18 January 2017 (2017-01-18), pages 43 -
  49, XP029956064, ISSN: 0167-9317, DOI: 10.1016/
  J.MEE.2017.01.001**
- **HELEN MILLER ET AL: "Single-molecule
  techniques in biophysics: a review of the
  progress in methods and applications",
  REPORTS ON PROGRESS IN PHYSICS,
  INSTITUTE OF PHYSICS PUBLISHING, BRISTOL,
  GB, vol. 81, no. 2, 19 December 2017
  (2017-12-19), pages 24601, XP020323759, ISSN:
  0034-4885, [retrieved on 20171219], DOI: 10.1088/
  1361-6633/AA8A02**

- FENGYUN YANG ET AL: "Direct observation of-DNA molecule reversal movement within microfluidic channels under electric field with single molecule imaging technique", CHINESE PHYSICS B, CHINESE PHYSICS B, BRISTOL GB, vol. 25, no. 7, 5 July 2016 (2016-07-05), pages 78201, XP020305953, ISSN: 1674-1056, [retrieved on 20160705], DOI: 10.1088/1674-1056/25/7/078201
- ANDREW EVAN KAMHOLZ ET AL: "Quantitative Analysis of Molecular Interaction in a Microfluidic Channel: The T-Sensor", ANALYTICAL CHEMISTRY, vol. 71, no. 23, 1 December 1999 (1999-12-01), US, pages 5340 - 5347, XP055545684, ISSN: 0003-2700, DOI: 10.1021/ac990504j
- SHARMA DEEPIKA ET AL: "Single positively charged particle trapping in nanofluidic systems", MICROELECTRONIC ENGINEERING, ELSEVIER PUBLISHERS BV., AMSTERDAM, NL, vol. 175, 18 January 2017 (2017-01-18), pages 43 - 49, XP029956064, ISSN: 0167-9317, DOI: 10.1016/J.MEE.2017.01.001
- HELEN MILLER ET AL: "Single-molecule techniques in biophysics: a review of the progress in methods and applications", REPORTS ON PROGRESS IN PHYSICS, INSTITUTE OF PHYSICS PUBLISHING, BRISTOL, GB, vol. 81, no. 2, 19 December 2017 (2017-12-19), pages 24601, XP020323759, ISSN: 0034-4885, [retrieved on 20171219], DOI: 10.1088/1361-6633/AA8A02
- MOJARAD NASSIREDIN ET AL: "Measuring the size and charge of single nanoscale objects in solution using an electrostatic fluidic trap", NATURE NANOTECHNOLOGY, vol. 7, no. 7, 24 June 2012 (2012-06-24), London, pages 448 - 452, XP093181064, ISSN: 1748-3387, Retrieved from the Internet <URL:http://www.nature.com/articles/nnano.2012.99> DOI: 10.1038/nnano.2012.99
- FENGYUN YANG ET AL: "Direct observation of-DNA molecule reversal movement within microfluidic channels under electric field with single molecule imaging technique", CHINESE PHYSICS B, CHINESE PHYSICS B, BRISTOL GB, vol. 25, no. 7, 5 July 2016 (2016-07-05), pages 78201, XP020305953, ISSN: 1674-1056, [retrieved on 20160705], DOI: 10.1088/1674-1056/25/7/078201
- ANDREW EVAN KAMHOLZ ET AL: "Quantitative Analysis of Molecular Interaction in a Microfluidic Channel: The T-Sensor", ANALYTICAL CHEMISTRY, vol. 71, no. 23, 1 December 1999 (1999-12-01), US, pages 5340 - 5347, XP055545684, ISSN: 0003-2700, DOI: 10.1021/ac990504j

## Description

## FIELD

This invention relates to generally to the characterization of individual molecules/molecular complexes in solution using optical microscopy.

The work leading to this invention has received funding from the European Research Council under the European Union's Seventh Framework Programme (FP7/2007-2013) / ERC grant agreement no 337969. The project leading to this application has received funding from the European Union's Horizon 2020 research and innovation programme under grant agreement No 766972. The project leading to this application has received funding from the European Union's Horizon 2020 research and innovation programme under the Marie Sklodowska-Curie grant agreement No 674979.

## BACKGROUND

Individual molecules/molecular complexes are typically not visible using optical microscopy. A technique for optically imaging single molecules immobilised on a glass cover slip is described in Vahid et. al., "Direct optical sensing of single unlabelled proteins and super-resolution imaging of their binding sites" Nature Communications 5, 4495 (2014); and Cole et al., "Label-Free Single-Molecule Imaging with Numerical-Aperture-Shaped Interferometric Scattering Microscopy" ACS Photonics 2017 4(2), 211-216, and also in WO2018/011591. However localizing the particles on the surface potentially modifies the molecules under investigation. A technique for optically imaging single molecules using a capillary is described in WO2017/041809. However this involves flowing a target particle through a capillary with a bore of <500nm and performing single-point detection. Such a capillary tube is difficult to make, and the scattering signal comprises a single event, or series of events, caused by individual particles moving through the focus of an illuminating laser beam. Further background can be found in WO2018/190162; US2017/307509; US2018/0136114; EP3276389; and WO2017/136664..

Acknowledged is the following prior art: SHARMA DEEPIKA ET AL: "Single positively charged particle trapping in nanofluidic systems", MICROELECTRONIC ENGINEERING, ELSEVIER PUBLISHERS BV., AMSTERDAM, NL, vol. 175, 18 January 2017 (2017-01-18), pages 43-49, XP029956064, ISSN: 0167-9317, DOI: 10.1016/ J.MEE.2017.01.001

HELEN MILLER ET AL: "Single-molecule techniques in biophysics: a review of the progress in methods and applications", REPORTS ON PROGRESS IN PHYSICS, INSTITUTE OF PHYSICS PUBLISHING, BRISTOL, GB, vol. 81, no. 2, 19 December 2017 (2017-12-19), page 24601, XP020323759, ISSN: 0034-4885, DOI: 10.1088/1361-6633/AA8A02 [retrieved on 2017-12-19]

Mojarad Nassiredin ET AL: "Measuring the size and charge of single nanoscale objects in solution using an electrostatic fluidic trap", nature nanotechnology, vol. 7, no. 7, 24 June 2012 (2012-06-24), pages 448-452, XP093181064, London ISSN: 1748-3387, DOI: 10.1038/nnano.2012.99 Retrieved from the Internet: URL:http://www.nature.com/articles/nnano.2012.99

## SUMMARY

In an aspect of the invention, there is provided a method of optically characterizing the size of individual molecules/molecular complexes in solution, the method comprising: flowing a solution comprising the molecules/molecular complexes into an imaging region of a microfluidic channel, wherein the imaging region of the microfluidic channel has a first lateral dimension of greater than 1μm in an x-direction wherein the x-direction is perpendicular to a direction of the flow; capturing a succession of images of the individual molecules/molecular complexes in the imaging region; tracking movement of the individual molecules/molecular complexes in at least the x-direction in the imaging region using the succession of images; characterizing the size of individual molecules/molecular complexes from the tracked movement; wherein capturing the succession of images comprises capturing the images using interferometric scattering optical microscopy; wherein the characterizing step comprises determining a diffusion coefficient of the molecules/molecular complexes from the tracked movement.

In another aspect of the invention, there is therefore described a method of optically characterizing individual molecules/molecular complexes, or other particles, in solution. The method may comprise flowing a solution comprising the molecules/molecular complexes into an imaging region of a microfluidic channel. In implementations the imaging region of the microfluidic channel has a first lateral dimension of greater than 1μm in an x-direction, where the x-direction is perpendicular to a direction of the flow. The lateral dimension in the x-direction may be greater than 2μm, 3μm, 5μm, or 10μm. The method may further comprise capturing a succession of images of the individual molecules/molecular complexes in the imaging region. The method may further comprise tracking movement of the individual molecules/molecular complexes in at least the x-direction in the imaging region using the succession of images. In some implementations the molecules/molecular complexes are not tracked in a z-direction, where the z-direction is perpendicular to the direction of the flow and to the x-direction. The method may comprise viewing the individual molecules/molecular complexes in the z-direction. The method may further comprise characterizing the individual molecules/molecular complexes from the tracked movement.

The location of a point corresponding to an individual molecule/molecular complex can be seen using optical microscopy even if the molecule/complex itself cannot be resolved, e.g. using fluorescence or iSCAT microscopy. Thus (provided the concentration of molecules/complexes is low) the locations of individual molecules/complexes can be tracked even if they cannot be resolved directly. Thus by providing a microfluidic channel of sufficient width, motion of a molecule/complex can be observed in at least this (width) direction. This enables the observed molecule/complex to be characterized according to a characteristic of its motion.

For example, the tracked movement can be used to determine a diffusion coefficient for the observed molecule/complex (or other particle), for example a 1D or 2D diffusion coefficient. Characterizing a molecule/complex according to a characteristic of its motion is useful because it allows information such as the size, and/or shape, and/or interaction of the molecule/complex with the solvent to be determined. Depending upon the application these may be more or less disentangled from one another. Generally however an estimate of a size, such as an average or maximum dimension or volume or effective radius, may be determined either directly or by first determining an estimate for the diffusion coefficient. The determined size may be an effective or hydrodynamic size.

Characterizing a molecule/complex according to a characteristic of its motion can also allow dynamic events to be visualized in solution, for example the joining or separation of molecules/molecular complexes and/or other particles, e.g. binding events

The techniques described herein are particularly useful when applied to molecules/molecular complexes but in principle they may be applied to other very small particles, for example particles having a maximum dimension which is less than a wavelength of light used for the imaging, or less than half this wavelength. Such particles may include metallic or other nanoparticles, colloid particles, polymer particles, viruses, and exosomes and other extra-cellular vesicles. In some implementations, however, the technique is used to characterize biomolecules/molecular complexes such as proteins, antibodies and the like. The solution may be an aqueous solution.

In some implementations of the method the particles may also be tracked in a y-direction, along the direction of the flow. A problem that can occur with such tracking is that if the flow profile is not uniform across the width of the channel, motion across the width of the channel can chance the speed of motion of the particle in the y-direction. For example a hydrodynamic, pressure-driven flow results in a parabolic flow profile with a gradual reduction in solution flow speed as the channel walls are approached. Thus in some implementations of the method a approximately flat flow profile is generated across the x-direction, for example by driving flow of the solution using electro-osmosis. In this way the rate of flow changes little across the x-direction except very close to the channel walls. Whatever the flow profile, the flow profile may be modelled so that its effect may be compensated, for example by subtracting an estimated flow in the y-direction, determined using the model, from a measured motion in the y-direction. The model may be a model of the electro-osmotic flow profile. Such techniques can therefore facilitate characterizing motion of the particles in 2D, for example to determine a 2D diffusion coefficient.

Some implementations of the method track movement of the particles whilst the fluid is flowing through the microfluidic channel (capturing images whilst the fluid is flowing); in other implementations flow of the fluid is halted whilst the particles are tracked (and imaged).

In some implementations of the method a plurality of microfluidic channels is provided, fluidically coupled to a manifold. Thus the method may comprise flowing the solution into a manifold (an array of channels), and flowing the solution from the manifold (array of channels) into a plurality of the imaging regions in a respective plurality of the microfluidic channels coupled to the manifold (array of channels). This can increase throughput, for example by increasing the chance that a particle diffuses into a channel, particularly if the channel is a blind channel. A single imaging system may be shared between the channels, or multiple imaging systems may be employed to track particle movement in multiple channels simultaneously.

In some implementations the channels have respective fluid outputs, for example via a second manifold coupled to the channels. This facilitates flushing out the channels for re-use, and thus high-throughput. In other implementations some or all of the channels are blind channels, i.e. they have a dead end rather than an output. In this case the channels may be air permeable to allow the channels to be filled with solvent (PDMS, polydimethylsiloxane, microfluidic channels have this property). This can facilitate determining a diffusion coefficient since the flow is stationary.

In general, however, the use of a microfluidic approach facilitates upstream processing of the solvent prior to characterization. For example such an upstream processing may comprise a process to separate a set of particles, e.g. molecules, for analysis using the method. Such a separation process may comprise a continuous separation process, for example involving one or more electric fields applied perpendicular to a direction of the flow, or a batch separation process, for example involving an electric field applied along the direction of the flow. Use of such a separation process prior to characterization helps to reduce complexity of the sample before analysis, and can thus increase the quality of characterization data obtained, e.g. a diffusion coefficient or particle size estimate.

In some implementations, but not essentially, the images are captured using interferometric scattering optical microscopy. In broad terms interferometric scattering optical microscopy (iSCAT) is a technique in which an imaged particle is illuminated with coherent light and the signal results from interference between light scattered from the particle and a reference light reflected from a nearby interface. This interference can result in signals which are amplified compared with some other approaches. The imaged particle may be label-free, i.e. the technique is capable of label-free detection of single biological molecules such as proteins/protein complexes. Generally, though not essentially, the method is used off-resonance, i.e. away from an absorption peak/edge of the particle.

Thus in some implementations of the method the imaging region has a light-reflecting interface. This may be, for example, an interface defined by an inner boundary of the microfluidic channel, i.e. an interface between the inner boundary of the channel and the solution. In principle, however, it may be an outer boundary of the microfluidic channel. In implementations capturing an image using interferometric scattering optical microscopy may thus comprise illuminating a particle (molecule/molecular complex) in the imaging region with coherent light using an objective lens such that the light is reflected from the interface and scattered by the molecule/molecular complex. The reflected light and the scattered light is captured using the objective lens provided to an imaging device to image the interference between the reflected and scattered light. (The illumination may comprise a collimated beam at an oblique angle to the interface; i.e. an angle of incidence between the beam and a normal to the interface may be between 0 degrees and 90 degrees). The imaging device may be a 1D or 2D imaging device, for example a camera.

Capturing the images using interferometric scattering optical microscopy may further comprise confining motion of the particle in a direction along the optical axis, i.e. z-direction, to less than a distance $2\lambda$, $\frac{3}{2}\lambda$, $\lambda$, $\frac{\lambda}{2}$, or $\frac{\lambda}{4}$ where $\lambda$ is the wavelength of the coherent light (in the solution). This may be done, for example, by suitably sizing a height of the microfluidic channel (in the z-direction). A range of $\frac{\lambda}{2}$ represents a range of maximum contrast to zero contrast in the interference image. Restricting the particle motion in this way, e.g. to within $\frac{\lambda}{4}$, facilitates tracking the particle because the particle is inhibited from disappearing from view (and reappearing elsewhere). In practice it can be difficult to fabricate microfluidic channels with such a small height but it is not essential for the z-direction movement to be limited to $\frac{\lambda}{2}$ or $\frac{\lambda}{4}$ for useful benefit to be obtained.

In implementations of the method (and corresponding system described later) a focus of the iSCAT microscope is set away from an edge of the microfluidic channel (in the z-direction), for example centrally in the channel in the z-direction.

In implementations of the method each of the succession of images of the particles is itself determined by capturing a sequence of interference images, that is a sequence of images of interference generated by light scattered by the particles. The sequence of interference images is then processed to provide an image for the succession of images used for the movement tracking.

In some implementations the sequence of interference images is averaged to define a background image which may then be subtracted from each interference image of the sequence. The sequence of interference images may be captured over a time period for which the interference from a particle fluctuates between a maximum and minimum light intensity one or more times, but some benefit can be obtained when capturing over shorter time periods.

The sequence of interference images, in implementations with the background subtracted, may then be processed to determine a location map image representing a map of intensity maxima and/or minima across the sequence of interference images; these represent particle locations. Optionally location map images representing intensity maxima and intensity minima may be combined.

The location map images may then be low-pass spatially filtered, for example using a Gaussian kernel. This is useful in merging multiple detections of the same particle at slightly different locations when the sequence of interference images extends over multiple maximum/minimum intensity cycles.

As previously described, the movement tracking may be used to determine an estimated size for a particle, for example from the diffusion coefficient. The iSCAT images may be used to determine an estimate of the polarizability of a particle, or used to determine an estimate of the mass of a particle if it is assumed that the mass of a particle (rather than its volume) is an approximate proxy for polarizability. For example the contrast of interference the signal from a particle in one or more of the interference images can be used to determine an estimate of the mass of the particle.

From the estimates of size e.g. volume of a particle and mass of a particle an estimated mass:size ratio for the particle may be determined. This can be used to classify, or potentially identify a particle such as a molecule or molecular complex.

In a related aspect there is provided a system for optically characterizing the size of individual molecules/molecular complexes, or other particles, in solution. The system comprises a microfluidic channel having an imaging region, wherein the imaging region of the microfluidic channel has a first lateral dimension of greater than $1\,\mu m$ in an x-direction, wherein the x-direction is perpendicular to a direction of flow in the imaging region of the microfluidic channel. The system may include a drive system to flow a solution comprising the molecules/molecular complexes into the imaging region. An optical image capture is included to capture a succession of images of the individual molecules/molecular complexes in the imaging region. A processor is configured to track movement of the individual molecules/molecular complexes in at least the x-direction in the imaging region using the succession of images and to determine data characterizing the size of individual molecules/molecular complexes from the tracked movement. The system may have a plurality of the microfluidic channels coupled to a microfluidic manifold, each channel having a respective imaging region. The drive system may comprises an electro-osmotic drive system, for example to control flow of the solution to move a sample of the solution into the imaging regions, optionally to halt flow of the solution for capturing the images, and optionally then to subsequently control flow of the solution to flush the sample of solution out of the imaging regions in preparation for analysing a subsequent sample of the solution.

In implementations the optical image capture system comprises an interferometric scattering (iSCAT) optical microscope and the imaging region has a light-reflecting interface as described above. The iSCAT microscope may comprise a source of coherent light, such as a laser, and an objective lens to direct the coherent light to illuminate the imaging region such that the light is reflected from the interface and scattered by a molecule/molecular complex in the imaging region. The objective lens is configured to capture the reflected light and the scattered light. An imaging device is configured to image interference between the reflected light and the scattered light. An optical path between the objective lens and coherent light source may include a beam splitter to separate the returned reflected and scattered light from the incident illuminating light. The imaging device may comprise a 1D or 2D image sensor, e.g. an EMCCD (Electron Multiplying Charge Coupled Device) sensor or a fast CMOS camerea, and an optical element such as a lens or mirror to focus the returned light onto the sensor.

The iSCAT microscope may have a contrast-enhancing mechanism, for example as described in in Liebel et al., "Ultrasensitive Label-Free Nanosensing and High-Speed Tracking of Single Proteins", Nano Letters 2017, 17(2), 1277-1281; or as described in the co-pending application by the same applicants as the present application, filed on the same day as the present application.

As noted above, some implementations of the methods/systems described herein use iSCAT microscopy, but this is not essential. Thus some other implementations of the methods/systems use fluorescence imaging/microscopy, for example TIRF (total internal reflection fluorescence) microscopy. Some implementations using fluorescence imaging do not confine motion of the particle in the z-direction, but z-direction confinement as described above can be useful in constraining the particles to an imaging plane. In this case the wavelength referred to may be that of the incident excitation light or that of the fluorescence. Again, micrometre scale channels may be used for fluidic accessibility whilst nanometre scale channels may be used for imaging. Fluorescence-based techniques can provide high sensitivity and/or high specificity in detection of analyte molecules, and can be used to obtain, e.g. a diffusion coefficient as described above. The flow of the solution/particles may be controlled by the geometry and/or (electro-osmotic) fluidic drive to slow or stop particles for this purpose. Other previously mentioned advantages such as the ability to perform high-throughput measurements on a solution can also be obtained. Thus upstream processing of the solvent prior to characterization may be employed as previously described. The use of multiple, "parallelized" microfluidic channels can facilitate obtaining multiple measurements to reduce statistical uncertainty in the measurements/characterization.

DRAWINGS

These and other aspects of the system will now be further described by way of example only, with reference to the accompanying figures, in which:

Figure 1 a schematic diagram of an interferometric scattering (iSCAT) optical microscope;

Figure 2 shows a schematic diagram of a system for optically characterizing individual molecules/molecular complexes in solution;

Figures 3a and 3b show interference images from the system of Figure 2;

Figure 4 shows a flow diagram of a procedure for processing interference images from the system of Figure 2 for movement tracking; and

Figure 5a and 5b show processed images from the system of Figure 2, showing movement of an antibody molecule.

In the figures like elements are indicated by like reference numerals.

DESCRIPTION

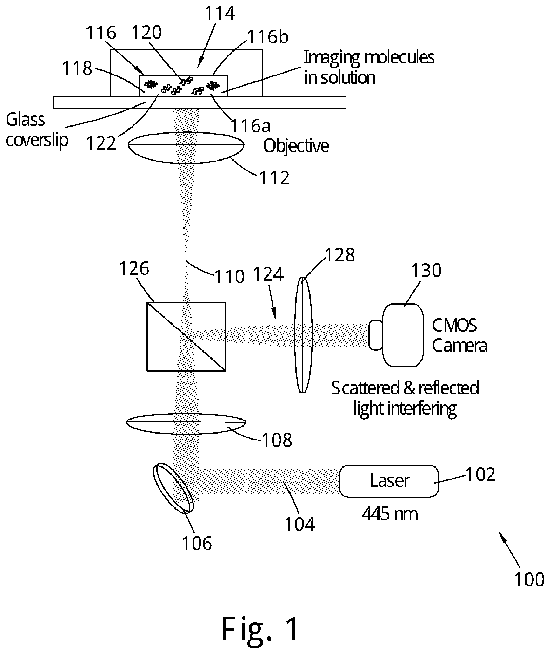

Referring to Figure 1, this shows a schematic diagram of an interferometric scattering (iSCAT) optical microscope 100. The microscope comprises a continuous wave laser 102 which provides a beam 104 of coherent light to a focussing element, lens 108, which focusses the beam at the back focal plane 110 of a microscope objective lens 112. In this example the laser is in the visible, at 445nm, and mirror 106 folds its optical path to lens 108. In an example the objective lens has 250 times magnification.

The objective lens 112, which may be an oil immersion objective, focusses the illumination on a detection region 114. In the example of Figure 1 the detection region 114 is defined by a chamber or channel 116 with upper and lower surfaces 116a,b, fabricated, for example, from glass or polymer. The chamber/channel 116 may contain a solution 118, such as an aqueous solution, containing one or more particles 120 to be imaged. In some other arrangements particles to be images may be immobilised on a glass surface, such as the surface of a cover slip. In some implementations the distance between surfaces 116a,b may be of order half a wavelength of the coherent light in the solution, to maintain an imaged particle in view.

The illumination is reflected from a reflecting interface 122, e.g. between the lower surface 116a of the chamber/channel 116 and the solution 118. The illumination is also scattered by the particle(s) 120. Both the reflected light and the scattered light is captured by objective lens 112, passed back along the optical path of the illumination, and directed into a separate path 124, in this example by a beam splitter 126. The reflected light and scattered light is then imaged. For example the reflected light and scattered light is focussed onto an image sensor 130 by imaging optics such as a lens 128. The image sensor (camera) may be, for example a CMOS image sensor or an EMCCD image sensor; it may have a frame rate sufficient to capture and track movement of an imaged particle as described later.

In some implementations the beam splitter 126 may be replaced by e.g. a filter cube to collect fluorescence.

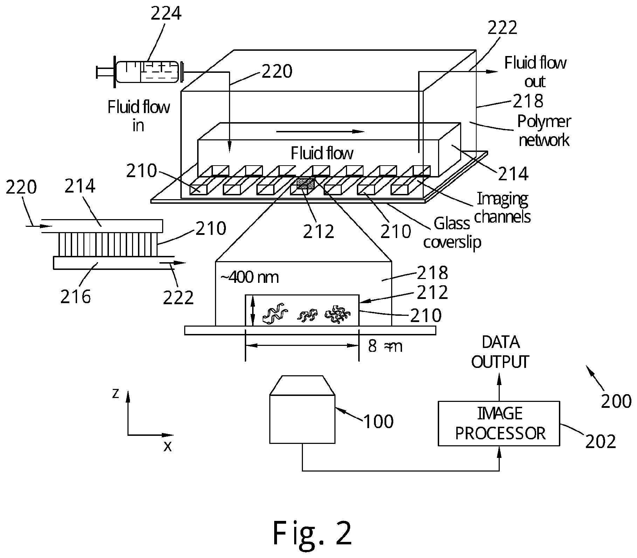

Figure 2 shows a schematic diagram of a system 200 for optically characterizing individual molecules/molecular complexes in solution. The example system comprises an iSCAT microscope 100 of the general type shown in Figure 1. The iSCAT microscope, more particularly the image sensor of the iSCAT microscope, provides captured interference images from the iSCAT microscope to an image processor 202. Image processor 202 processes the captured images as described later to output data comprising processed images and/or data characterizing particles in the image such as data representing one or more of particle mass, particle size, particle polarizability, and a particle diffusion coefficient. Image processor 202 may comprise a suitable programmed general purpose computer system, or a dedicated processor implemented in hardware and/or software.

The system includes a set of microfluidic channels 210 coupled to an inlet manifold 214. Each channel has a respective imaging region 212, also shown in cross-section in Figure 2. The channels may be blind channels as illustrated, or may be coupled to an outlet manifold 216 as shown schematically in the inset diagram. As indicated in the figure, the microfluidic channels may have a restricted height of only a few hundred nanometres, for example ~400nm. By contrast they have a width of several microns, e.g. ~8$\mu$m. Ideally the height could be less than 400nm but such structures can sag. By contrast the manifold may have a height of a few microns,

e.g ~5$\mu$m.

The manifold 214 has a fluid inlet 220 and, optionally, a fluid outlet 222 (via the outlet manifold in the inset). Solution is driven into the inlet and may pass out through the outlet. Where the channels are blind channels they can nonetheless be filed with solution as air can diffuse out through the walls and ends of the microfluidic channels. The solution is driven by a fluid drive system 224, schematically illustrated by a syringe pump. However for such a fluid drive the flow speed profile across the lateral width of a channel is parabolic, decreasing towards the edges of the channel. In some implementations, therefore, an electro-osmotic drive system is employed not shown), which has a more uniform flow profile until very close to the channel edges. Such an electro-osmotic drive system may comprise a high voltage DC power supply with a first polarity (anode) terminal electrically coupled to the solution at one end (e.g. upstream) of the set of microfluidic channels and a second polarity (cathode) terminal electrically coupled to the solution at another end (e.g. downstream) of the set of microfluidic channels.

In an example implementation the microfluidic channels and manifold(s) may be formed in a polymer 218, such as PDMS. The channels may be formed using the standard soft lithography techniques for microfluidics, for example with a replica mould. Where the resist is spin coated the lower profile structures may be fabricated first. The replica mould may be used to fabricate a PDMS-based microfluidic structure, which may be sealed with glass e.g. a coverslip.

The use of restricted height channels limits motion of the images particles in the z-direction, reducing the risk that a particle becomes difficult to track by disappearing at one location (due to destructive interference) and reappearing at another, different location. There is also substantially no convection in such channels, so that the observed particle motion is governed by diffusion. The observed diffusion is in the x- and y-directions and constrained (on long time scales) in the z-direction; it may be observed in either 1D or 2D, depending upon the imaging system/sensor employed.

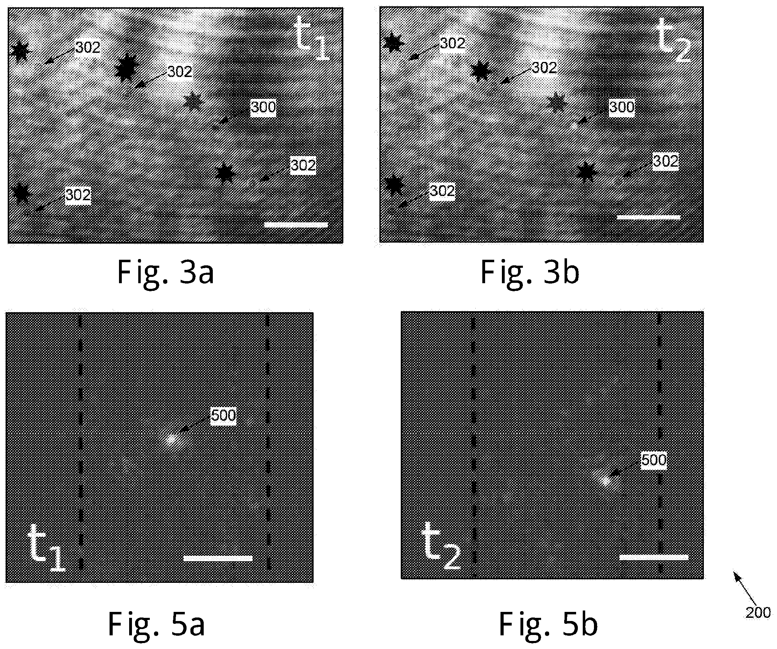

Figures 3a and 3b show interference images from the iSCAT microscope in the system of Figure 2, showing the same imaged region at times t1 and t2 and illustrating the raw image fluctuations seen by the image sensor 130 (the scale bar is 2$\mu$m). As can be seen a raw image comprises essentially static interference patterns and interference patterns 300 resulting from imaged particles. These interference patterns comprise concentric rings centred at a location of the particle. Figure 3a shows two types of particle, static particles 302, for example particles attached to a surface, and moving particles 300. Also present, but not shown in Figures 3a and 3b, are interference patterns from the walls of the microchannel.

As shown in Figures 3a and 3b, when a particle 300 moves it can move from a location in which it creates constructive interference (Figure 3b), to a location in which it creates destructive interference (Figure 3a). If the image sensor (camera) 130 of the iSCAT microscope has sufficient frame rate, which depends on the speed of the particle in the solution, the corresponding fluctuation in light intensity can be detected.

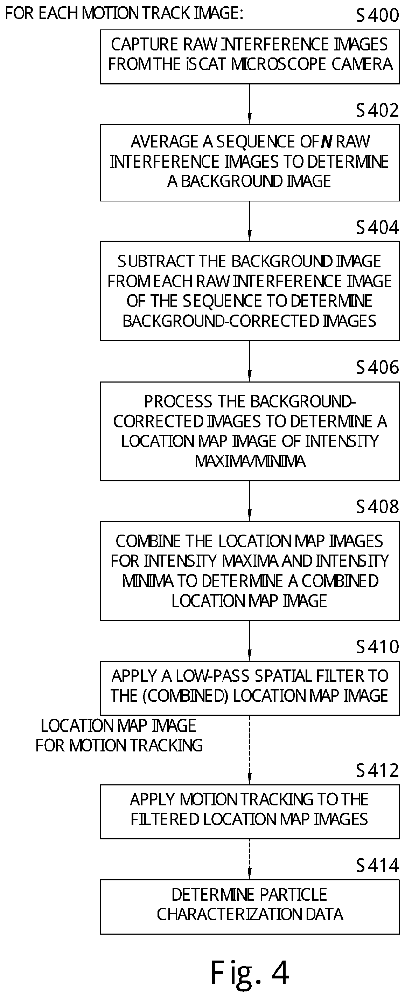

Figure 4 shows a flow diagram of example image processing which may be implemented by the image processor 202 of Figure 2 to determine data characterizing the imaged particles in solution in the microfluidic channel(s). In broad terms the image processing aims to enhance a representation of moving particles in the captured images and suppress a stationary background.

Starting at step S400 the procedure processes the raw interference images from the iSCAT microscope to determine images for use in particle motion tracking. In some implementations these raw images are part of a video stream, which may be a compressed video stream, e.g. an AVI-compressed video stream. In this case image frames may be decompressed before processing.

At step S400 the procedure captures i.e. inputs raw interference images from the iSCAT microscope and, at S402, averages a sequence of $N$ such images to determine a mean background image. The iSCAT camera captures variation in the interference generated by an imaged particle moving in the solution and the averaging process reduces or removes such variation, reducing this to an average background level. Thus at step S404 the mean background image is subtracted from each of the raw images of the sequence to determine a sequence of background-corrected images. The number N of averaged images may be chosen such that there is significant interference intensity variation amongst the images; it may include more than one maximum/minimum intensity variation.

The background image may be considered as an instantaneous or local image as there may be a shift in the background over time. For example, for each frame, the background may be estimated by taking the median (or mean) of N local frames. For example, a video of length M might be separated in M/N segments. Each segment of length N may then be analysed. Alternatively, a stack of N frames may be selected around each frame so that the frame is in the middle. After subtraction of the background image the image may be normalized by the square root of the intensity to obtain a more uniform noise intensity. Some implementations of the algorithm look for an intensity variation larger than the local noise, which is proportional to the square root of the local intensity. It can therefore be helpful to normalise the noise intensity on the image. Optionally the procedure may subtract a median of the resulting stack (image sequence) to suppress remaining invariant features.

A result of step S404 is a sequence of images in which the stationary background has been suppressed. These images are then processed to identify one or more locations of intensity variation. For example in one implementation the sequence of background-corrected images is processed to determine a location map image identifying locations of intensity maxima within the images (S406). The sequence of background-corrected images may also be processed to determine a location map image identifying locations of intensity minima within the images, where an intensity minimum is one in which the intensity falls below a previously subtracted background level (S406). Optionally these location map images may be combined or correlated, for example by multiplying values of corresponding pixels, to improve the location map (S408). Optionally an average, e.g. median, value of a location map image may be subtracted from each of the pixels to further suppress stationary features and artefacts, for example image compression artefacts.

The location map images may include multiple intensity maxima for the same particle at closely located positions. To avoid confusing the motion tracking the location map images may thus be spatially low-pass filtered, for example using a Gaussian kernel (S410). If necessary, for example if the frames coordinates are not stable, rotation and/or deformation detection may be used to perform image registration.

Figures 5a and 5b show examples of processed images, showing individual antibody complexes 500 in solution (there may be some aggregation) at different times t1 and t2; the scale bar is 2$\mu$m.

Motion tracking may be applied to the location map images (S412), for example using off the shelf software such as TrackMate Tinevez, JY.; Perry, N. & Schindelin, J. et al. (2016), "TrackMate: An open and extensible platform for single-particle tracking", Methods 115: 80-90, PMID 27713081 (on Google Scholar). An output of the motion tracking may comprise, for example, coordinates of a particle in one or more dimensions, such as x and optionally y-dimensions, over time. This data may be used to determine other data characterizing a particle (S414), such as a mean square displacement of the particle over a period of time, or a mean square displacement of the particle in the x or y-direction over a period of time. Other features may be derived, for example speed of motion. Optionally a correction may be made for a known e.g. calibrated speed of flow in the y-direction; this may be a function of x.

In some implementations higher level particle characterization data may be determined, such as a diffusion coefficient for the particle; and/or an estimated effective size (dimension, area, or volume) for the particle may be determined. For 3D diffusion the diffusion coefficient is inversely proportional to particle size (radius); for 2D diffusion it is inversely proportional to log of the particle size.

In some implementations particle characterization data may also be obtained from the (raw) iSCAT images. In particular the iSCAT signal, that is the image contrast, depends upon the polarizability of the imaged particle. It appears that the polarizability of a particle such as a molecule/molecular complex as measured by iSCAT contrast depends on the mass of the particle. For example an approximately linear relationship between these has been observed by Piliaril and Sandoghdar, arXiv 1310.7460 Fig. 2d (perhaps because the number of dipoles present depends upon the mass). Thus the iSCAT image contrast, optionally calibrated, may be used to estimate for a mass of the imaged particle, albeit the signal may also be sensitive to the particle shape and illumination polarization.

Optionally an estimated particle mass, as determined above, and an estimated particle size, as determined above, may be used in combination to characterize the particle. For example a ratio of one to the other may be determined. This may be used to classify, or potentially even to identify, the particle.

Many alternatives will occur to the skilled person. The invention is not limited to the described embodiments and encompasses modifications apparent to those skilled in the art lying within the scope of the claims appended hereto.

**Claims**

1. A method of optically characterizing the size of individual molecules/molecular complexes in solution, the method comprising:

   flowing a solution comprising the molecules/molecular complexes into an imaging region of a microfluidic channel, wherein the imaging region of the microfluidic channel has a first lateral dimension of greater than $1\,\mu$m in an x-direction wherein the x-direction is perpendicular to a direction of the flow;
   capturing a succession of images of the individual molecules/molecular complexes in the imaging region;
   tracking movement of the individual molecules/molecular complexes in at least the x-direction in the imaging region using the succession of images;
   characterizing the size of individual molecules/molecular complexes from the tracked movement; wherein capturing the succession of images comprises capturing the images using interferometric scattering optical microscopy; wherein the characterizing step comprises determining a diffusion coefficient of the molecules/molecular complexes from the tracked movement.

2. The method as claimed in claim 1, wherein the tracking further comprises tracking movement of the molecules/molecular complexes in a y-direction along the direction of the flow, and generating an approximately flat flow profile for the flowing solution in the x-direction.

3. The method as claimed in claim 2, wherein generating the approximately flat flow profile comprises flowing the solution using electro-osmosis.

4. The method as claimed in any preceding claim, comprising flowing the solution into a manifold, and flowing the solution from the manifold into a plurality of the imaging regions in a respective plurality of the microfluidic channels coupled to the manifold.

5. The method as claimed in claim 2, wherein the microfluidic channels coupled to the manifold are blind microfluidic channels.

6. The method as claimed in any one of claims 1 to 4, wherein the microfluidic channel has an outlet, and wherein the tracking of movement of the molecules/molecular complexes is performed whilst the solution is flowing through the microfluidic channel.

7. The method as claimed in claim **1,** wherein the imaging region has a light-reflecting interface, and wherein capturing the images using interferometric scattering optical microscopy comprises, for each image, illuminating a molecule/molecular complex in the imaging region with coherent light using an objective lens such that the light is reflected from the interface and scattered by the molecule/molecular complex; capturing the reflected light and the scattered light using the objective lens; and providing the captured reflected and scattered light to an imaging device to image interference between the reflected light and the scattered light.

8. The method as claimed in claim 1 or 7, further comprising restricting movement of the molecules/molecular complexes in a z-direction in the imaging region, wherein the z-direction is a lateral direction perpendicular to the x-direction, wherein the restricting comprises limiting movement of the molecules/molecular complexes in the z-direction to a distance of less than $2\lambda$, $\frac{3}{2}\lambda$, $\lambda$, or $\frac{\lambda}{2}$, where $\lambda$ is the wavelength of coherent light used for the interferometric scattering optical microscopy.

9. The method as claimed in claim 1, 7 or 8, wherein capturing the succession of images comprises, for each of the images of the succession of images, capturing a sequence of interference images, wherein an interference images comprises an image of interference generated by light scattered by the molecules/molecular complexes, and processing the sequence of interference images to provide the image of the succession of images; preferably wherein processing the sequence of interference images comprises determining a location map image representing a map of one or both of intensity maxima and intensity minima across the sequence of interference images, and wherein processing the sequence of interference images further comprises low-pass filtering the location map image.

10. The method as claimed in any one of claims 1 or 7 to 9, further comprising determining a mass of an individual molecule/molecular complex from one or more images captured using the interferometric scattering optical microscopy, and preferably wherein the characterizing comprises determining a ratio of the mass to a size of the individual molecule/molecular complex.

11. The method as claimed in any one of claims 1to 10, wherein capturing the succession of images comprises capturing the images using an interferometric scattering optical microscope, and wherein a focus of the interferometric scattering optical microscope is set away from an edge of the microfluidic channel in a z-direction perpendicular to the x-direction, and preferably wherein the molecules/molecular complexes comprises a biological molecules/complexes, and wherein the solution comprises an aqueous solution.

12. A system for optically characterizing the size of individual molecules/molecular complexes in solution, the system comprising:

a microfluidic channel having an imaging region, wherein the imaging region of the microfluidic channel has a first lateral dimension of greater than 1μm in an x-direction, wherein the x-direction is perpendicular to a direction of flow in the imaging region of the microfluidic channel;
a drive system to flow a solution comprising the molecules/molecular complexes into the imaging region;
an optical image capture system to capture a succession of images of the individual molecules/molecular complexes in the imaging region;
a processor to track movement of the individual molecules/molecular complexes in at least the x-direction in the imaging region using the succession of images and to determine data characterizing the size of individual molecules/molecular complexes from the tracked movement by determining a diffusion coefficient of the molecules/molecular complexes from the tracked movement,
wherein the imaging region has a light-reflecting interface, and wherein the optical image capture system comprises an interferometric scattering optical microscope, the microscope comprising: a source of coherent light; an objective lens to direct the coherent light to illuminate the imaging region such that the light is reflected from the interface and scattered by a molecule/molecular complex in the imaging region, wherein the objective lens is configured to capture the reflected light and the scattered light; and an imaging device configured to image interference between the reflected light and the scattered light.

13. The system as claimed in claim 12, comprising a microfluidic manifold and plurality of the microfluidic channels coupled to the microfluidic manifold each with a respective imaging region; and wherein the drive system comprises an electro-osmotic drive system, preferably wherein a focus of the interferometric scattering optical microscope is set away from an edge of the microfluidic channel in a z-direction perpendicular to the x-direction.

14. A method as claimed in any one of claims 1-to 11 or a system as claimed in any one of claims 12 to 13 wherein the individual molecules/molecular complexes are replaced by nanoscale particles.

**Patentansprüche**

1. Verfahren zur optischen Charakterisierung der Größe von einzelnen Molekülen/Molekülkomplexen in Lösung, wobei das Verfahren Folgendes umfasst:

Fließenlassen einer Lösung, die die Moleküle/-Molekülkomplexe umfasst, in eine Bildgebungsregion eines mikrofluidischen Kanals, wobei die Bildgebungsregion des mikrofluidischen Kanals eine erste laterale Abmessung von mehr als 1 μm in einer x-Richtung aufweist, wobei die x-Richtung senkrecht zu einer Strömungsrichtung ist;
Aufnehmen einer Aufeinanderfolge von Bildern der einzelnen Moleküle/Molekülkomplexe in der Bildgebungsregion;
Verfolgen der Bewegung der einzelnen Moleküle/Molekülkomplexe in mindestens der x-Richtung in der Bildgebungsregion unter Verwendung der Aufeinanderfolge von Bildern;
Charakterisieren der Größe von einzelnen Molekülen/Molekülkomplexen aus der verfolgten Bewegung; wobei das Aufnehmen der Aufeinanderfolge von Bildern Aufnehmen der Bilder unter Verwendung interferometrischer optischer Streumikroskopie umfasst; wobei der Charakterisierungsschritt Bestimmen eines Diffusionskoeffizienten der Moleküle/Molekülkomplexe aus der verfolgten Bewegung umfasst.

2. Verfahren nach Anspruch 1, wobei das Verfolgen ferner Verfolgen der Bewegung der Moleküle/Molekülkomplexe in einer y-Richtung entlang der Strömungsrichtung und Erzeugen eines annähernd flachen Strömungsprofils für die fließende Lösung in der x-Richtung umfasst.

3.  Verfahren nach Anspruch 2, wobei das Erzeugen des ungefähr flachen Strömungsprofils Fließenlassen der Lösung unter Verwendung von Elektroosmose umfasst.

4.  Verfahren nach einem der vorhergehenden Ansprüche, umfassend Fließenlassen der Lösung in einen Verteiler und Fließenlassen der Lösung aus dem Verteiler in eine Mehrzahl der Bildgebungsregionen in einer jeweiligen Mehrzahl der mikrofluidischen Kanäle, die mit dem Verteiler gekoppelt sind.

5.  Verfahren nach Anspruch 2, wobei die mit dem Verteiler gekoppelten mikrofluidischen Kanäle blinde mikrofluidische Kanäle sind.

6.  Verfahren nach einem der Ansprüche 1 bis 4, wobei der mikrofluidische Kanal einen Auslass aufweist und wobei das Verfolgen der Bewegung der Moleküle/Molekülkomplexe durchgeführt wird, während die Lösung durch den mikrofluidischen Kanal fließt.

7.  Verfahren nach Anspruch 1, wobei die Bildgebungsregion eine lichtreflektierende Grenzfläche aufweist und wobei das Aufnehmen der Bilder unter Verwendung interferometrischer optischer Streumikroskopie für jedes Bild Beleuchten eines Moleküls/Molekülkomplexes in der Bildgebungsregion mit kohärentem Licht unter Verwendung einer Objektivlinse, so dass das Licht von der Grenzfläche reflektiert und von dem Molekül/Molekülkomplex gestreut wird; Aufnehmen des reflektierten Lichts und des gestreuten Lichts unter Verwendung der Objektivlinse; und Bereitstellen des aufgenommenen reflektierten und gestreuten Lichts an eine Bildgebungsvorrichtung umfasst, um Interferenz zwischen dem reflektierten Licht und dem gestreuten Licht abzubilden.

8.  Verfahren nach Anspruch 1 oder 7, ferner umfassend Beschränken der Bewegung der Moleküle/Molekülkomplexe in einer z-Richtung in der Bildgebungsregion, wobei die z-Richtung eine laterale Richtung senkrecht zu der x-Richtung ist, wobei das Beschränken Beschränken der Bewegung der Moleküle/Molekülkomplexe in der z-Richtung auf einen Abstand von weniger als $2\lambda$, $\frac{3}{2}\lambda$, $\lambda$ oder $\frac{\lambda}{2}$ umfasst, wobei $\lambda$ die Wellenlänge des kohärenten Lichts ist, das für die interferometrische optische Streumikroskopie verwendet wird.

9.  Verfahren nach Anspruch 1, 7 oder 8, wobei das Aufnehmen der Aufeinanderfolge von Bildern für jedes der Bilder der Aufeinanderfolge von Bildern Aufnehmen einer Folge von Interferenzbildern, wobei ein Interferenzbild ein Bild von Interferenz umfasst, die durch Licht erzeugt wird, das durch die Moleküle/Molekülkomplexe gestreut wird, und Verarbeiten der Folge von Interferenzbildern umfasst, um das Bild der Aufeinanderfolge von Bildern bereitzustellen; wobei vorzugsweise das Verarbeiten der Folge von Interferenzbildern Bestimmen eines Positionskartenbildes umfasst, das eine Karte von Intensitätsmaxima und/oder Intensitätsminima über die Folge von Interferenzbildern darstellt, und wobei das Verarbeiten der Folge von Interferenzbildern ferner Tiefpassfiltern des Positionskartenbildes umfasst.

10. Verfahren nach einem der Ansprüche 1 oder 7 bis 9, ferner umfassend Bestimmen einer Masse eines einzelnen Moleküls/Molekülkomplexes aus einem oder mehreren Bildern, die unter Verwendung der interferometrischen optischen Streumikroskopie aufgenommen wurden, und wobei vorzugsweise das Charakterisieren Bestimmen eines Verhältnisses der Masse zu einer Größe des einzelnen Moleküls/Molekülkomplexes umfasst.

11. Verfahren nach einem der Ansprüche 1 bis 10, wobei das Aufnehmen der Aufeinanderfolge von Bildern Aufnehmen der Bilder unter Verwendung eines interferometrischen optischen Streumikroskops umfasst und wobei ein Fokus des interferometrischen optischen Streumikroskops von einem Rand des mikrofluidischen Kanals in einer z-Richtung senkrecht zu der x-Richtung weg gesetzt ist und wobei die Moleküle/Molekülkomplexe vorzugsweise biologische Moleküle/Komplexe umfassen und wobei die Lösung eine wässrige Lösung umfasst.

12. System zum optischen Charakterisieren der Größe von einzelnen Molekülen/Molekülkomplexen in Lösung, wobei das System Folgendes umfasst:

    einen mikrofluidischen Kanal mit einer Bildgebungsregion, wobei die Bildgebungsregion des mikrofluidischen Kanals eine erste laterale Abmessung von mehr als 1 µm in einer x-Richtung aufweist, wobei die x-Richtung senkrecht zu einer Strömungsrichtung in der Bildgebungsregion des mikrofluidischen Kanals ist;
    ein Antriebssystem zum Fließenlassen einer Lösung, die die Moleküle/Molekülkomplexe umfasst, in die Bildgebungsregion;
    ein optisches Bildaufnahmesystem zum Aufnehmen einer Aufeinanderfolge von Bildern der einzelnen Moleküle/Molekülkomplexe in der Bildgebungsregion;
    einen Prozessor zum Verfolgen der Bewegung der einzelnen Moleküle/Molekülkomplexe in mindestens der x-Richtung in der Bildgebungsregion unter Verwendung der Aufeinanderfolge von Bildern und zum Bestimmen von Daten, die die Größe von einzelnen Molekülen/Molekülkomplexen aus der verfolgten Bewegung durch Bestimmen eines Diffusionskoeffizienten der Moleküle/Molekülkomplexe aus der verfolgten Bewegung charakterisieren, wobei die Bildgebungsregion eine lichtreflektierende Grenzfläche aufweist und wobei das optische Bildaufnahmesystem ein interferometrisches optisches Streumikroskop umfasst, wobei das Mikroskop Folgendes umfasst: eine Quelle kohärenten Lichts; eine Objektivlinse zum Lenken des kohärenten Lichts, um die Bildgebungsregion so zu beleuchten, dass das Licht von der Grenzfläche reflektiert und durch ein Molekül/einen Molekülkomplex in der Bildgebungsregion gestreut wird, wobei die Objektivlinse dazu ausgelegt ist, das reflektierte Licht und das gestreute Licht zu erfassen; und eine Bildgebungsvorrichtung, die dazu ausgelegt ist, Interferenz zwischen dem reflektierten Licht und dem gestreuten Licht abzubilden.

13. System nach Anspruch 12, umfassend einen mikrofluidischen Verteiler und eine Mehrzahl der mikrofluidischen Kanäle, die mit dem mikrofluidischen Verteiler gekoppelt sind und jeweils eine jeweilige Bildgebungsregion aufweisen; und wobei das Antriebssystem ein elektroosmotisches Antriebssystem umfasst, wobei vorzugsweise ein Fokus des interferometrischen streuenden optischen Mikroskops von einem Rand des mikrofluidischen Kanals in einer z-Richtung senkrecht zu der x-Richtung weg gesetzt ist.

14. Verfahren nach einem der Ansprüche 1 bis 11 oder System nach einem der Ansprüche 12 bis 13, wobei die einzelnen Moleküle/Molekülkomplexe durch nanoskalige Teilchen ersetzt werden.

**Revendications**

1. Procédé de caractérisation optique de la taille de molécules/complexes moléculaires individuels en solution, le procédé comprenant :

l'écoulement d'une solution comprenant les molécules/complexes moléculaires jusque dans une région d'imagerie d'un canal microfluidique, la région d'imagerie du canal microfluidique ayant une première dimension latérale supérieure à 1 μm dans une direction x, la direction x étant perpendiculaire à une direction de l'écoulement ;
la capture d'une succession d'images des molécules/complexes moléculaires individuels dans la région d'imagerie ;
le suivi du déplacement des molécules/complexes moléculaires individuels dans au moins la direction x dans la région d'imagerie à l'aide de la succession d'images ;
la caractérisation de la taille de molécules/complexes moléculaires individuels à partir du déplacement suivi ;
dans lequel la capture de la succession d'images comprend la capture des images à l'aide d'une microscopie optique à diffusion interférométrique ; dans lequel l'étape de caractérisation comprend la détermination d'un coefficient de diffusion des molécules/complexes moléculaires à partir du déplacement suivi.

2. Procédé selon la revendication **1,** dans lequel le suivi comprend en outre le suivi du déplacement des molécules/complexes moléculaires dans une direction y le long de la direction de l'écoulement, et la génération d'un profil d'écoulement approximativement plat pour la solution en écoulement dans la direction x.

3. Procédé selon la revendication 2, dans lequel la génération du profil d'écoulement approximativement plat comprend l'écoulement de la solution à l'aide d'une électro-osmose.

4. Procédé selon l'une quelconque des revendications précédentes, comprenant l'écoulement de la solution jusque dans un collecteur, et l'écoulement de la solution à partir du collecteur jusque dans une pluralité de régions d'imagerie dans une pluralité respective de canaux microfluidiques couplés au collecteur.

5. Procédé selon la revendication 2, dans lequel les canaux microfluidiques couplés au collecteur sont des canaux microfluidiques sans issue.

6. Procédé selon l'une quelconque des revendications 1 à 4, dans lequel le canal microfluidique a une sortie, et dans lequel le suivi du déplacement des molécules/complexes moléculaires est réalisé pendant que la solution s'écoule à travers le canal microfluidique.

7. Procédé selon la revendication 1, dans lequel la région d'imagerie a une interface réfléchissant la lumière, et dans lequel la capture des images à l'aide d'une microscopie optique à diffusion interférométrique comprend, pour chaque image, l'illumination d'une molécule/d'un complexe moléculaire dans la région d'imagerie avec une lumière cohérente à l'aide d'une lentille objectif de telle sorte que la lumière soit réfléchie à partir de l'interface et diffusée par la molécule/le complexe moléculaire ; la capture de la lumière réfléchie et de la lumière diffusée à l'aide de la lentille objectif ; et la fourniture de la lumière réfléchie et diffusée capturée à un dispositif d'imagerie pour imager l'interférence entre la lumière réfléchie et la lumière diffusée.

8. Procédé selon la revendication 1 ou la revendication 7, comprenant en outre la restriction du déplacement des molécules/complexes moléculaires dans une direction z dans la région d'imagerie, la direction z étant une direction latérale perpendiculaire à la direction x, dans lequel la restriction comprend la limitation du déplacement des molécules/complexes moléculaires dans la direction z à une distance inférieure à $2\lambda$, $\frac{3}{2}\lambda$, $\lambda$, ou $\frac{\lambda}{2}$, où $\lambda$ est la longueur d'onde de la lumière cohérente utilisée pour la microscopie optique à diffusion interférométrique.

9. Procédé selon la revendication 1, la revendication 7 ou la revendication 8, dans lequel la capture de la succession d'images comprend, pour chacune des images de la succession d'images, la capture d'une séquence d'images d'interférence, dans lequel une image d'interférence comprend une image de l'interférence générée par une lumière diffusée par les molécules/complexes moléculaires, et le traitement de la séquence d'images d'interférence pour fournir l'image de la succession d'images ; préférablement dans lequel le traitement de la séquence d'images d'interférence comprend la détermination d'une image de carte de localisation représentant une carte de l'un ou des deux parmi des maxima d'intensité et minima d'intensité sur toute la séquence d'images d'interférence, et le traitement de la séquence d'images d'interférence comprenant en outre un filtrage passe-bas de l'image de carte de localisation.

10. Procédé selon l'une quelconque des revendications 1 ou 7 à 9, comprenant en outre la détermination d'une masse d'une molécule/d'un complexe moléculaire individuel(le) à partir d'une ou de plusieurs images capturées à l'aide de la microscopie optique à diffusion interférométrique, et préférablement dans lequel la caractérisation comprend la détermination d'un rapport de la masse à une taille de la molécule/du complexe moléculaire individuel(le).

11. Procédé selon l'une quelconque des revendications 1 à 10, dans lequel la capture de la succession d'images comprend la capture des images à l'aide d'un microscope optique à diffusion interférométrique, et dans lequel un foyer du microscope optique à diffusion interférométrique est placé à l'écart d'un bord du canal microfluidique dans une direction z perpendiculaire à la direction x, et préférablement dans lequel les molécules/complexes moléculaires comprennent des molécules/complexes biologiques, et dans lequel la solution comprend une solution aqueuse.

12. Système de caractérisation optique de la taille de molécules/complexes moléculaires individuels en solution, le système comprenant :

un canal microfluidique ayant une région d'imagerie, la région d'imagerie du canal microfluidique ayant une première dimension latérale supérieure à 1 $\mu$m dans une direction x, la direction x étant perpendiculaire à une direction de l'écoulement dans la région d'imagerie du canal microfluidique ;
un système d'entraînement pour faire s'écouler une solution comprenant les molécules/complexes moléculaires jusque dans la région d'imagerie ;
un système de capture d'image optique pour capturer une succession d'images des molécules/complexes moléculaires individuels dans la région d'imagerie ;
un processeur pour suivre le déplacement des molécules/complexes moléculaires individuels dans au moins la direction x dans la région d'imagerie à l'aide de la succession d'images et pour déterminer des données caractérisant la taille des molécules/complexes moléculaires individuels à partir du déplacement suivi en déterminant un coefficient de diffusion des molécules/complexes moléculaires à partir du déplacement suivi,
dans lequel la région d'imagerie a une interface réfléchissant la lumière, et dans lequel le système de capture d'image optique comprend un microscope optique à diffusion interférométrique, le microscope comprenant : une source de lumière cohérente ; une lentille objectif pour diriger la lumière cohérente pour illuminer la région d'imagerie de telle sorte que la lumière soit réfléchie à partir de l'interface et diffusée par une molécule/un complexe moléculaire dans la région d'imagerie, la lentille objectif étant configurée pour capturer la lumière réfléchie et la lumière diffusée ; et un dispositif d'imagerie configuré pour imager l'interférence entre la lumière réfléchie et la lumière diffusée.

13. Système selon la revendication 12, comprenant un collecteur microfluidique et une pluralité de canaux microfluidiques couplés au collecteur microfluidique chacun avec une région d'imagerie respective ; et dans lequel le système d'entraînement comprend un système d'entraînement électro-osmotique, préférablement dans lequel un foyer du microscope optique à diffusion interférométrique est placé à l'écart d'un bord du canal microfluidique dans une direction z perpendiculaire à la direction x.

**14.** Procédé selon l'une quelconque des revendications 1 à 11 ou système selon l'une quelconque des revendications 12 à 13, dans lequel les molécules/complexes moléculaires individuels sont remplacés par des particules nanométriques.

Fig. 1

**Fig. 2**

Fig. 3a

Fig. 3b

Fig. 5a

Fig. 5b

EP 3 884 424 B1

FOR EACH MOTION TRACK IMAGE:   S400

CAPTURE RAW INTERFERENCE IMAGES
FROM THE iSCAT MICROSCOPE CAMERA

S402

AVERAGE A SEQUENCE OF *N* RAW
INTERFERENCE IMAGES TO DETERMINE
A BACKGROUND IMAGE

S404

SUBTRACT THE BACKGROUND IMAGE
FROM EACH RAW INTERFERENCE IMAGE
OF THE SEQUENCE TO DETERMINE
BACKGROUND-CORRECTED IMAGES

S406

PROCESS THE BACKGROUND-
CORRECTED IMAGES TO DETERMINE A
LOCATION MAP IMAGE OF INTENSITY
MAXIMA/MINIMA

S408

COMBINE THE LOCATION MAP IMAGES
FOR INTENSITY MAXIMA AND INTENSITY
MINIMA TO DETERMINE A COMBINED
LOCATION MAP IMAGE

S410

APPLY A LOW-PASS SPATIAL FILTER TO
THE (COMBINED) LOCATION MAP IMAGE

LOCATION MAP IMAGE
FOR MOTION TRACKING

S412

APPLY MOTION TRACKING TO THE
FILTERED LOCATION MAP IMAGES

S414

DETERMINE PARTICLE
CHARACTERIZATION DATA

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018011591 A
- WO 2017041809 A
- WO 2018190162 A
- US 2017307509 A
- US 20180136114 A
- EP 3276389 A
- WO 2017136664 A

**Non-patent literature cited in the description**

- **VAHID**. Direct optical sensing of single unlabelled proteins and super-resolution imaging of their binding sites. *Nature Communications*, 2014, vol. 5, 4495
- **COLE et al.** Label-Free Single-Molecule Imaging with Numerical-Aperture-Shaped Interferometric Scattering Microscopy. *ACS Photonics*, 2017, vol. 4 (2), 211-216
- Single positively charged particle trapping in nanofluidic systems. **SHARMA DEEPIKA et al.** MICROELECTRONIC ENGINEERING. ELSEVIER PUBLISHERS BV, 18 January 2017, vol. 175, 43-49
- Single-molecule techniques in biophysics: a review of the progress in methods and applications. **HELEN MILLER et al.** REPORTS ON PROGRESS IN PHYSICS. INSTITUTE OF PHYSICS PUBLISHING, 19 December 2017, vol. 81, 24601
- **MOJARAD NASSIREDIN et al.** Measuring the size and charge of single nanoscale objects in solution using an electrostatic fluidic trap. *nature nanotechnology*, 24 June 2012, vol. 7, ISSN 1748-3387, 448-452, http://www.nature.com/articles/nnano.2012.99
- **LIEBEL et al.** Ultrasensitive Label-Free Nanosensing and High-Speed Tracking of Single Proteins. *Nano Letters*, 2017, vol. 17 (2), 1277-1281
- **TRACKMATE TINEVEZ, JY ; PERRY, N. ; SCHINDELIN, J. et al.** TrackMate: An open and extensible platform for single-particle tracking. *Methods*, 2016, vol. 115, 80-90